# EUROPÄISCHE PATENTANMELDUNG

(11) **EP 1 974 609 A1**
(43) Veröffentlichungstag der Anmeldung: **01.10.2008**
(21) Anmeldenummer: 07006560.2
(22) Anmeldetag: 29.03.2007
(51) Int. Cl.: A01N 43/82, A01N 43/78, A01N 57/20, A01N 43/90, A01N 25/12, A01N 25/08, A01P 13/00

(54) **Verfahren zur Herstellung von wasserdispergierbaren Granulaten (WG)**

(71) Anmelder: Bayer CropScience GmbH, 65929 Frankfurt/Main (DE)
(72) Erfinder: Patel, Smita., D-65817 Eppstein-Bremthal (DE); Baumgärtner, Joachim., D-65931 Frankfurt a. M. (DE)

(57) **Zusammenfassung**

Verfahren zur Herstellung von Granulaten, enthaltend folgende Schritte und Komponenten: (1) Bildung eines Absorbates durch Mischung von flüssigen Adjuvantien (a) auf Trägerstoffen hoher Saugfähigkeit (b); (2) Bildung einer Suspension durch Mischung von einem Herbizid aus der Gruppe der Oxyacetamide mit einem oder mehreren agrochemischen Wirkstoffen (c), Tensiden aus den Gruppen der Netz und Dispergiermittel (d) und in der Formulierung üblichen Hilfs- und Zusatzstoffen (e); (3) Bildung eines Aufschlämmung durch Einmischen des Absorbates (1) in die Suspension (2); (4) Bildung eines Granulates durch Trocknung der Aufschlämmung (3) im Wirbelschichtverfahren.
Die so erhältlichen Granulate und das so erhältliche herbizide Mittel eignen sich zur Bekämpfung von Schadpflanzen.

## Beschreibung

Die Erfindung betrifft das Gebiet der Wirkstoffgranulate, insbesondere wasserdispergierbare Granulate agrochemischer Wirkstoffe (WG) und ein spezielles Verfahren zu deren Herstellung.

Bekannt sind dem Fachmann Wirkstoffgranulate z.B. aus Winnacker-Küchler, "Chemische Technologie", Band 7, C. Hanser-Verlag, München, 4. Auflage 1986). Obwohl mit bestehenden Granulaten bereits gute Ergebnisse erzielt wurden, besteht noch ein breiter Raum für Verbesserungen, beispielsweise in Bezug auf die Beladungsdichte solcher Formulierungen sowie die Verbesserung weiterer wichtiger Eigenschaften, wie z.B. Staubfreiheit und gute Rieselfähigkeit. Aber auch die Bereitstellung von Kombinationsgranulaten (Co-Formulierungen) mit weiteren Wirkstoffen zur Erweiterung des Wirkungsspektrums, zum Schutz der Kulturpflanzen (z.B. durch Safener, Antidote) und/oder zur Wirkungssicherheit bzw. -steigerung ist ein wichtiges Arbeitsgebiet der Formulierungstechnologie, da hier Wirkstoffe mit zum Teil recht unterschiedlichen physikalischen, chemischen und biologischen Parametern adäquat gemeinsam formuliert werden müssen. So sollten Formulierungen von Wirkstoffen, allein oder in Kombinationen mehrerer Wirkstoffe, für den Pflanzenschutz im allgemeinen eine hohe chemische und physikalische Stabilität, eine gute Applizierbarkeit und Anwenderfreundlichkeit und eine breite biologische Wirkung mit hoher Selektivität im Hinblick auf die verwendeten Wirkstoffe aufweisen. Daneben besteht auch Bedarf die Herstellungsverfahren im Hinblick auf die Kostensituation weiter zu verbessern.

Agrochemische Wirkstoffe, wie z.B. Pflanzenschutzmittel, benötigen bei der Anwendung häufig Hilfssubstanzen, welche entweder das die Wirkung reduzierende Ablaufen der Sprühflüssigkeit verhindern, oder die Benetzung der Blattoberfläche durch diese Sprühflüssigkeit unterstützen, oder die Penetration der angewendeten Wirkstoffe durch die Blattoberfläche der schädlichen Pflanzen beschleunigen.

Andere Hilfsmitteln verbessern die Regenfestigkeit der angetrockneten Spritzbeläge. Dadurch wird die Wirkung oft beträchtlich verstärkt. Diese Hilfssubstanzen werden häufig "Adjuvantien" genannt, obwohl dieser Begriff durchaus auch noch in anderem Zusammenhang üblich ist. Im folgenden ist jedoch unter "Adjuvant" stets eine Substanz im oben genannten Sinn gemeint.

Geeignete Adjuvantien sind an sich wohl bekannt, In der Regel handelt es sich dabei um ölartige Substanzen mit mehr oder weniger stark ausgeprägtem Tensidcharakter. Die Mischbarkeit mit Wasser in der landwirtschaftlichen Anwendungskonzentration geht hier über einen weiten Bereich, von spontan löslichen bis hin zu solchen Substanzen, welche zusätzliche Emulgatoren zur homogenen Einmischung in die Sprühflüssigkeit benötigen. Diese Adjuvantien können in der landwirtschaftlichen Praxis der ansonsten fertigen Sprühflüssigkeit direkt zugefügt, und durch Umpumpen einhomogenisiert werden (Tank-Mix-Verfahren).

Es hat jedoch nicht an Bemühungen gefehlt, agrochemische Wirkstoffe, wie z.B. Pflanzenschutzmittel, mit bereits von vornherein enthaltenen Adjuvantien zur Verfügung zu stellen (Co-Formulierungen, Ready-to-Use-Formulierungen). Für den Anwender entstehen dabei Vorteile, z.B. Bereitstellung geeigneter Adjuvantien und praktische Applikation.

Eine Schwierigkeit liegt allerdings darin, dass typische Adjuvantien oft flüssig oder niedrig schmelzend sind, was ihren Einbau in feste Formulierungen erschwert, insbesondere in Hinblick auf freie Rieselfähigkeit, besonders nach Lagerung unter kompaktierenden Bedingungen.

In WO 2001/30147 A1 werden als Adjuvantien nicht-ionische Alkylethoxylate auf Fällungskieselsäure absorbiert, und diese Absorbate als Bestandteile für wasserdispergierbare Pulver (WP) im Einsatz als Pflanzenschutzmittel verwendet.

In WO 2005/009132 A1 werden als Adjuvantien alkoxylierte Glyceride an hoch saugfähigen Silikat ("white carbon") absorbiert, und die Absorbate als Bausteine für wasserdispergierbare Pulver (WP) oder Granulate (WG), hergestellt durch das Extrusionsverfahren, mit herbizid wirksamen Sulfonylharnstoffen verwendet.

In WO 1993/05652 A1 werden Adjuvantien aus den Tensidklassen der Alkylethersulfate und -phosphate, sowie der ethoxylierten Fettalkohole und Fettsäuren an hoch saugfähigen mineralischen Trägern absorbiert, und danach z.B. in wasserdispergierbare Granulate (WG) für den Einsatz als Rübenherbizide eingebracht.

Dieses Dokument beschreibt prinzipiell die Anwendbarkeit für physikalisch und chemisch stabile Wirkstoffe in WGs mit erhöhter biologischer Aktivität durch Adjuvantien; liefert aber keine Lösung für Mehrfachkombination mit zum Teil sensibel formulierbaren Wirkstoffen, wie z.B. aus der Klasse der Oxyacetamide (Flufenacet, Mefenacet), die eine gewisse Temperatursensitivität im Granulierungsverfahren zeigen.

Aufgabe der Erfindung ist es daher, ein Herstellungsverfahren für adjuvanthaltige wasserdispergierbare Granulate (WG) zur Verfügung zu stellen, in welchem Herbizide der Klasse Oxyacetamide mit weiteren agrochemischen Wirkstoffen zusammen formuliert werden können. Daneben sollte eine hohe physikalische und chemische Lagerstabilität dieser Wirkstoff-Kombinationen im WG ermöglicht werden sowie eine Wirkungssicherheit bzw. -steigerung der verwendeten agrochemischen Wirkstoffe.

Diese Aufgabe wird gelöst durch ein spezielles Verfahren zur Herstellung von wasserdispergierbaren Granulaten (WG).

Gegenstand der Erfindung ist somit ein Verfahren zur Herstellung von wasserdispergierbaren Granulaten (WG), enthaltend folgende Schritte (1 bis 4) und Komponenten (a bis e):
(1) Bildung eines Absorbates durch Mischung von
   - einem oder mehreren flüssigen oder verflüssigbaren Adjuvantien (a)
   - einem oder mehreren Trägerstoffen von hoher Saugfähigkeit (b), gekennzeichnet durch eine Aufnahmefähigkeit von wenigstens 160 g Dibutylphthalat (DBP) pro 100 g Trägermaterial;
(2) Bildung einer Suspension durch Mischung von
   - einem Herbizid aus der Gruppe der Oxyacetamide mit einem oder mehreren agrochemischen Wirkstoffen (c),
   - einem oder mehreren Tensiden aus den Gruppen der Netz- und Dispergiermittel (d),
   - einem oder mehreren in der Formulierung üblichen Hilfs- und Zusatzstoffen (e), und
   - anschließender Nassvermahlung bis 50 % der Partikelgröße < 5 µm sind;
(3) Bildung einer Aufschlämmung ("slurry") durch Einmischen des Absorbates (1) in die Suspension (2);
(4) Bildung eines wasserdispergierbaren Granulates (WG) durch Trocknung der Aufschlämmung (3) im Wirbelschichtverfahren bei einer Produkttemperatur bis maximal 50°C.

Eine bevorzugte Ausführungsform der Erfindung ist ein WG enthaltend die Komponenten
a) 0,01 bis 60 Gew.-% eines nicht-ionischen Adjuvants, vorzugsweise Genapol C-100 und Atlox MBA 13/10;
b) 0,005 bis 50 Gew.-% eines Trägerstoffs von hoher Saugfähigkeit (DBP-Aufnahme ≥ 160 g/100 g Träger), vorzugsweise Sipernat 50S;
c) 0,01 bis 60 Gew.-% eines Herbizids aus der Gruppe der Oxyacetamide, vorzugsweise Flufenacet, mit einem oder mehreren agrochemischen Wirkstoffen, vorzugsweise Glyphosate und Metosulam;
d) 1,0 bis 30 Gew.-% eines oder mehrerer Tenside aus der Gruppe der Netz- und Dispergiermittel, vorzugsweise Galoryl DT530 und Baykanol SL;
e) 0,01 bis 80 Gew.-% eines oder mehrerer in der Formulierung üblicher Hilfs- und Zusatzstoffe, vorzugsweise Kaolin 1777 und Antischaummittel SL.

Eine weitere bevorzugte Ausführungsform der Erfindung ist ein WG enthaltend die Komponenten
a) 15 bis 35 Gew.-% Genapol C-100 oder Atlox MBA 13/10;
b) 2 bis 22 Gew.-% Sipernat 50S;
c) 1 bis 30 Gew.-% Flufenacet,
   1 bis 30 Gew.-% Glyphosate und
   0,01 bis 10 Gew.-% Metosulam;
d) 1,0 bis 30 Gew.-% Galoryl DT530 und
   1,0 bis 30 Gew.-% Baykanol SL;
e) 1,0 bis 40 Gew.-% Kaolin 1777 und
   0,01 bis 10 Gew.-% Antischaummittel SL.

Eine weitere Ausführungsform der Erfindung ist auch ein herbizides Mittel enthaltend eine Mischung von Glyphosate, Flufenacet, Metosulam und gegebenenfalls zusätzlich ein nicht-ionisches Adjuvant, vorzugsweise Genapol C-100 und Atlox MBA 13/10.

Als Adjuvantien (Komponente a) kommen solche tensidartigen Stoffe in Frage, die entweder bei Raumtemperatur flüssig sind, wobei die Viskosität hoch oder niedrig sein kann (also etwa Wasser- bis Honigkonsistenz), oder wachsartig sind und bei Temperaturen bis ca. 80°C fließfähig werden, oder aber die in organischen Lösemitteln löslich sind. Bevorzugt kommen solche tensidartigen Stoffe in Frage, die entweder bei Raumtemperatur flüssig oder aber wachsartig sind und bei Temperaturen bis ca.80°C fließfähig werden. Als Tenside gelten Stoffe, welche die Oberflächenspannung des Wassers herabsetzen. Hiervon kommen folgende Substanzklassen in Frage:
Nicht-ionische Derivate von Polyalkylenglykolen: Hierunter werden Derivate von Stoffen verstanden, die formal durch Polymerisation von mehrwertigen Alkoholen erhalten werden, vor allem von Ethylen- und Propylenglykol, oder Gemischen aus beiden. Unter nicht-ionische Derivate solcher Polyalkylenglykole fallen solche Substanzen, bei denen der Polyalkylenglykol-Strukturbestandteil entweder nur einseitig durch chemische Reste mit mindestens 6 C-Atomen derivatisiert ist und einseitig noch eine freie Hydroxylgruppe vorliegt, oder aber diese durch eine kleine Schutzgruppe (Methyl- oder Acetylgruppe) "verkappt" ist. Verwendet werden können:
a) Derivatisierte Polyalkylenglykole des Ester-Typs, enthaltend ais chemischen Rest einen Acylrest. Dieser kann sich ableiten von einer aliphatischen oder aromatischen Carbonsäure mit 1 - 30 C-Atomen.
b) Derivatisierte Polyalkylenglykole des Ether-Typs, enthaltend als chemischen Rest einen Aryl- oder Alkylrest mit 6 - 30 C-Atomen. Entgegen dem Polyalkylenglykol-Strukturbestandteil ist ein solcher Aryl- oder Alkylrest als hydrophober Kohlenwasserstoff-Teil anzusehen.

Bevorzugt sind Alkylenglykole des Ether-Typs, wobei der hydrophobe Kohlenwasserstoff-Teil aromatischer (Di- oder Triarylalkylaryl-) oder aliphatischer Natur ist (lineare oder verzweigte C6 - C30-Ketten).

Besonders bevorzugt sind Polyalkylenglykole des Ether-Typs, deren hydrophober Kohlenwasserstoff-Teil aliphatischer Natur ist (lineare oder verzweigte C6-C30-Ketten).

Typische Vertreter geeigneter Adjuvantien finden sich in der Atlox MBA-Produktreihe (Uniquema) und Genapol C-Produkte (Clariant).

Bevorzugt sind Atlox MBA 13/10 und Genapol C-100.

Der Anteil der Adjuvantien (Komponente a) in den nach dem erfindungsgemäßen Verfahren herstellbaren Formulierungen kann 0,01 - 60 Gew.-%, bevorzugt 5 - 40 Gew.-%, besonders bevorzugt 25 - 30 Gew.-% betragen.

Die Trägerstoffe (Komponente b) weisen eine hohe Saugfähigkeit auf. Unter hochsaugfähigen Trägerstoffen werden solche verstanden, die mehr Flüssigkeit an sich binden können, als ihrem eigenen Gewicht entspricht. Als Standardmaß für diese Eigenschaft wird die Aufnahmefähigkeit für Dibutylphthalat (DBP) genommen. Hochsaugfähige Trägerstoffe sind gekennzeichnet durch eine Aufnahmefähigkeit von wenigstens 160 g DBP pro 100 g Trägermaterial. Das Absorbat muss noch rieseifähig sein.

Zum Einsatz können hier organische Träger wie Polyacrylate und anorganische Träger wie bestimmte Kieselsäuren kommen. Bevorzugt sind pyrogene - und Fällungskieselsäuren der Carplex-, Aerosil- und Sipemat-Marken mit DBP-Aufnahme von 160 bis mehr als 300g/100g Trägermaterial.

Besonders bevorzugt ist Sipernat 50S (Degussa AG) mit einer DBP-Aufnahme von mehr als 300g/100g Trägermaterial,

Der Anteil der Trägerstoffe (Komponente b) in den nach dem erfindungsgemäßen Verfahren herstellbaren Formulierungen kann 0,005 - 50 Gew.-%, bevorzugt 2 - 22 Gew.-% betragen.

Unter dem Begriff "Suspension" wird erfindungsgemäß eine Dispersion fester Partikel in einer flüssigen Phase verstanden.

In den erfindungsgemäßen WGs sind Herbizide der Klasse Oxyacetamide enthalten. Hierzu gehören u.a. Flufenacet und Mefenacet, bevorzugt ist Flufenacet.

Als die daneben enthaltenen agrochemischen Wirkstoffe (Komponente c) kommen z.B. Herbizide, Insektizide, Akarizide, Nematizide, Fungizide, Safener, Düngemittel und/oder Wachstumsregulatoren in Betracht.

Als Kombinationspartner sind beispielsweise bekannte Wirkstoffe, die auf einer Inhibition von beispielsweise Acetolactat-Synthase, Acetyl-Coenzym-A-Carboxylase, PS I, PS II, HPPDO, Phytoene-Desaturase, Protoporphyrinogen-Oxidase, Glutamine-Synthetase, Cellulosebiosynthese, 5-Enolpyruvylshikimat-3-phosphat-Synthetase beruhen, einsetzbar. Solche Verbindungen und auch andere einsetzbare Verbindungen mit teilweise unbekanntem oder anderem Wirkungsmechanismus sind z.B. in Weed Research 26, 441-445 (1986), oder in dem Handbuch "The Pesticide Manual", 12. Auflage 2000, oder 13. Auflage 2003 oder 14. Auflage 2006/2007, oder in dem entsprechenden "e-Pesticide Manual", Version 4 (2006), jeweils herausgegeben vom British Crop Protection Council, (im Folgenden auch kurz "PM"), und dort zitierter Literatur beschrieben. Listen von "Common names" sind auch in "The Compendium of Pesticide Common Names" im Internet verfügbar. Als literaturbekannte Herbizide, die mit den Verbindungen der Formel (I) kombiniert werden können, sind z.B. folgende Wirkstoffe zu nennen (Anmerkung: Die Verbindungen sind entweder mit dem "common name" nach der International Organization for Standardization (ISO) oder mit dem chemischen Namen, ggf. zusammen mit einer üblichen Codenummer bezeichnet):
acetochlor; acibenzolar-S-methyl; acifluorfen(-sodium), aclonifen; AD-67; AKH 7088, d.h. [[[1-[5-[2-Chloro-4-(trifluoromethyl)-phenoxy]-2-nitrophenyl]-2-methoxyethylidene]-amino]-oxy]-essigsäure und -essigsäuremethylester; alachlor; alloxydim(-sodium); ametryn; amicarbazone, amidochlor, amidosulfuron; aminopyralid; amitrol" AMS, d.h. Ammoniumsulfamat; ancimidol; anilofos; asulam; atrazin; aviglycine; azafenidin, azimsulfuron (DPX-A8947), aziprotryn; barban; BAS 516 H, d.h. 5-Fluor-2-phenyl-4H-3,1-benzoxazin-4-on; beflubutamid, benazolin(-ethyl); bencarbzone; benfluralin; benfuresate; benoxacor; bensulfuron(-methyl); bensulide; bentazone; benzfendizone; benzobicyclon, benzofenap; benzofluor; benzoylprop(-ethyl); benzthiazuron; bialaphos; bifenox; bispyribac(-sodium), borax; bromacil; bromobutide; bromofenoxim; bromoxynil(-octanoat); bromuron; buminafos; busoxinone; butachlor; butafenacil, butamifos; butenachlor; buthidazole; butralin; butroxydim, butylate; cafenstrole (CH-900); carbetamide; carfentrazone(-ethyl); caloxydim, CDAA, d.h. 2-Chlor-N,N-di-2-propenylacetamid; CDEC, d.h. Diethyldithiocarbaminsäure-2-chlorallylester; chlomethoxyfen; chloramben; chlorazifop-butyl, chlorbromuron; chlorbufam; chlorfenac; chlorfenprop; chlorflurecol(-methyl); chlorflurenol(-methyl); chloridazon; chlorimuron(-ethyl); chlormequat(-chloride); chlormesulon (IC1-A0051); chlornitrofen; chlorotoluron; chloroxuron; chlorpropham; chlorsulfuron; chlorthal-dimethyl; chlorthiamid, chlortoluron, cinidon(-methyl und -ethyl), cinmethylin; cinosulfuron; clefoxydim, clethodim; clodinafop und dessen Esterderivate (z.B. clodinafop-propargyl); clofencet; clomazone; clomeprop; cloproxydim; clopyralid; clopyrasulfuron(-methyl), cloquintocet(-mexyl); cloransulam(-methyl), cumyluron (JC 940); cyanamide; cyanazine; cycloate; cyclosulfamuron (AC 104); cycloxydim; cycluron; cyhaiofop und dessen Esterderivate (z.B. Butylester, DEH-112); cyperquat; cyprazine; cyprazole; cyprosulfamide; daimuron; 2,4-D, 2,4-DB; dalapon; daminozide; dazomet; n-decanol; desmedipham; desmetryn; di-allate; dicamba; dichlobenil; dichlormid; dichlorprop(-P)-salze; diclofop und dessen Ester wie diclofop-methyl; diclofop-P(-methyl); diclosulam, diethatyl(-ethyl); difenoxuron; difenzoquat(-metilsuffate); diflufenican; diflufenzopyr, dimefuron; dimepiperate, dimethachlor; dimethametryn; dimethazone; dimethenamid (SAN-582H); dimethenamide-P; dimethylarsinic acid; dimexyflam, dimethipin; dimetrasulfuron, dinitramine; dinoseb; dinoterb; diphenamid; dipropetryn; diquat-salze; dithiopyr; diuron; DNOC; eglinazine-ethyl; EL 77, d.h. 5-Cyano-1-(1,1-dimethylethyl)-N-methyl-1H-pyrazole-4-carboxamid; endothal; epoprodan, EPTC; esprocarb; ethalfluralin; ethametsulfuron-methyl; ethidimuron; ethiozin; ethofumesate; ethoxyfen und dessen Ester (z.B. Ethylester, HN-252); ethoxysulfuron, etobenzanid (HW 52); F5231, d.h. N-[2-Chlor-4-fluor-5-[4-(3-fluorpropyl)-4,5-dihydro-5-oxo-1H-tetrazol-1-yl]-phenyl]-ethansulfonamid; fenchlorazole(-ethyl); fenclorim; fenoprop; fenoxan, fenoxaprop und fenoxaprop-P sowie deren Ester, z.B. fenoxaprop-P-ethyl und fenoxaprop-ethyl; fenoxydim; fentrazamide, fenuron; ferrous sulfate; flamprop(-methyl oder -isopropyl oder -isopropyl-L); flamprop-M(-methyl oder -isopropyl); flazasulfuron; florasulam, fluazifop und fluazifop-P und deren Ester, z.B. fluazifop-butyl und fluazifop-P-butyl, fluazolate, flucarbazone(-sodium), flucetosulfuron; fluchloralin; flufenpyr(-ethyl); flumetralin; flumetsulam; flumeturon; flumiclorac(-pentyl), flumioxazin (S-482); flumipropyn; fluometuron, fluorochloridone, fluorodifen; fluoroglycofen(-ethyl); flupoxam (KNW-739); flupropacil (UBIC-4243); flupropanoate; flupyrsulfuron(-methyl)(-sodium); flurazole; flurenol(-butyl); fluridone; flurochloridone; fluroxypyr(-meptyl); flurprimidol, flurtamone; fluthiacet(-methyl), fluthiamide, fluxofenim; fomesafen; foramsulfuron, forchlorfenuron; fosamine; furilazole; furyloxyfen; gibberillic acid; glufosinate(-ammonium); glyphosate(-isopropylammonium); halosafen; halosulfuron(-methyl); haloxyfop und dessen Ester; haloxyfop-P (= R-haloxyfop) und dessen Ester; HC-252; hexazinone; imazamethabenz(-methyl); imazamethapyr, imazamox, imazapic, imazapyr; imazaquin und Salze wie das Ammoniumsalz; imazethamethapyr; imazethapyr; imazosulfuron; inabenfide; indanofan; indol-3-acetic acid; 4-indol-3-ylbutyric acid; iodosulfuron-methyl(-sodium); ioxynil(-octanoat); isocarbamid; isopropalin; isoproturon; isouron; isoxaben; isoxachlortole, isoxadifen(-ethyl); isoxaflutole, isoxapyrifop; karbutilate; lactofen; lenacil; linuron; MCPA; MCPB; mecoprop(-P); mefenpyr(-diethyl); mefluidid; mepiquat(-chloride); mesosulfuron(-methyl); mesotrione, metam; metamifop; metamitron; metazachlor; methabenzthiazuron; metham; methazole; methoxyphenone; methylarsonic acid; methyl-cyclopropene; methyldymron; methylisothiocyanate; methabenzthiazuron; metobenzuron; metobromuron; (alpha-)metolachlor; metosulam (XRD 511); metoxuron; metribuzin; metsulfuron-methyl; MH; MK-616; molinate; monalide; monocarbamide dihydrogensulfate; monolinuron; monuron; MT 128, d.h. 6-Chlor-N-(3-chlor-2-propenyl)-5-methyl-N-phenyl-3-pyridazinamin; MT 5950, d.h. N-[3-Chlor-4-(1-methylethyf)-phenyl]-2-methylpentanamid; naproanilide; napropamide; naptalam; NC 310, d.h. 4-(2,4-dichlorbenzoyl)-1-methyl-5-benzyloxypyrazol; neburon; nicosulfuron; nipyraclofen; nitralin; nitrofen; nitrophenolate mixture; nitrofluorfen; nonanoic acid; norflurazon; orbencarb; orthasuffamuron; oxabetrinil; oryzalin; oxadiargyl (RP-020630); oxadiazon; oxasulfuron, oxaziclomefone, oxyfluorfen; paclobutrazol; paraquat(-dichloride); pebulate; pelargonic acid, pendimethalin; penoxulam; pentachlorophenol; pentanochlor; pentoxazone, perfluidone; pethoxamid; phenisopham; phenmedipham; picloram; picolinafen, pinoxaden, piperophos; piributicarb; pirifenop-butyl; pretilachlor; primisulfuron(-methyl); probenazole; procarbazone-(sodium), procyazine; prodiamine; profluralin; profoxydim; prohexadione(-calcium); prohydrojasmon; proglinazine(-ethyl); prometon; prometryn; propachlor, propanil; propaquizafop; propazine; propham; propisochlor; propoxycarbazone(-sodium); n-propyl-dihydrojasmonate; propyzamide; prosulfalin; prosulfocarb; prosulfuron (CGA-152005); prynachlor; pyraclonil; pyraflufen(-ethyl), pyrasulfotole; pyrazolynate; pyrazon; pyrazosulfuron(-ethyl); pyrazoxyfen; pyribenzoxim, pyributicarb, pyridafol, pyridate; pyriftalid; pyriminobac(-methyl), pyrimisulfan; pyrithiobac(-sodium) (KIH-2031); pyroxasulfone; pyroxofop und dessen Ester (z.B. Propargylester); pyroxulam; quinclorac, quinmerac; quinoclamine, quinofop und dessen Esterderivate, quizalofop und quizalofop-P und deren Esterderivate z.B. quizalofop-ethyl; quizalofop-P-tefuryl und -ethyl; renriduron; rimsuifuron (DPX-E 9636); S 275, d.h. 2-[4-Chlor-2-fluor-5-(2-propynyloxy)-phenyl]-4,5,6,7-tetrahydro-2H-indazol; secbumeton; sethoxydim; siduron; simazine; simetryn; sintofen; SN 106279, d.h. 2-[[7-[2-Chlor-4-(trifluor-methyl)-phenoxy]-2-naphthalenyl]-oxy]-propansäure und -methylester; sulcotrione, sulfentrazone (FMC-97285, F-6285); sulfazuron; sulfometuron(-methyl); sulfosate (ICI-A0224); sulfosulfuron, TCA; tebutam (GCP-5544); tebuthiuron; tecnacene; tembotrione; tefuryltrione; tepraloxydim, terbacil; terbucarb; terbuchlor; terbumeton; terbuthylazine; terbutryn; TFH 450, d.h. N,N-Diethyl-3-[(2-ethyl-6-methylphenyl)-sulfonyl]-1H-1,2,4-triazol-1-carboxamid; thenylchlor (NSK-850); thiafluamide, thiazafluron; thiazopyr (Mon-13200); thidiazimin (SN-24085); thiencarbazone; thifensuffuron(-methyl); thiobencarb; Ti 35; tiocarbazil; topramezone; tralkoxydim; tri-allate; triasulfuron; triaziflam, triazofenamide; tribenuron(-methyl); triclopyr; tridiphane; trietazine; trifloxysulfuron; trifluralin; triflusulfuron und Ester (z.B. Methylester, DPX-66037); trimeturon; trinexapac; tritosulfuron, tsitodef; uniconazole; vernolate; WL 110547, d.h. 5-Phenoxy-1-[3-(trifluormethyl),phenyl]-1H-tetrazol; BAY MKH 6561, UBH-509. D-489; LS 82-556; KPP-300; NC-324; NC-330; KH-218; DPX-N8189; SC-0774; DOWCO-535; DK-8910; V-53482; PP-600; MBH-001; KIH-9201; ET-751; KIH-6127, KIH-2023, KIH-5996 und KIH-485.

Bevorzugt sind Herbizide, wie z.B. blattaktive Herbizide wie ALS-Inhibitoren (z.B. Sulfonamide wie Flucarbazone, Propoxycarbazone oder Amicarbazone oder Sulfonylharnstoffe wie Mesosulfuron, lodosulfuron-methyl, Ethoxysulfuron, Amidosulfuron, Foramsulfuron), Diflufenican, Bromoxynilhaltige oder loxynilhaltige Produkte, Herbizide aus der Klasse der Aryloxy-Phenoxypropionate wie Fenoxaprop-P-ethyl, Herbizide aus der Klasse der Triazolopyrimidinsulfonamid-Derivate (z.B. Flumetsulam, Metosulam), Zuckerrübenherbizide wie Desmedipham, Phenmedipham, Ethofumesate oder Metamitron, Wirkstoffe aus der Klasse der HPPD-Inhibitoren (z.B. Isoxaflutole, Sulcotrione, Mesotrione) oder auch Wirkstoffe aus der Gruppe der phosphorhaltigen Herbizide oder deren Derivate wie Salze, wie z.B. Glufosinate und dessen Ammoniumsalz in racemischer Form, d.h. 2-Amino-4-[hydroxy(methyl)phosphinoyl]-butansäure bzw. dessen Ammoniumsalz, das L-Enantiomer von Glufosinate und dessen Ammoniumsalz, Bilanafos/Bialaphos, d.h. L-2-Amino-4-[hydroxy(methyl)phosphlnoyl]-butanoyl-L-alaninyl-L-alanin und dessen Natriumsalz, sowie Glyphosate.

Unter den in den erfindungsgemäßen WG-Formulierungen als Komponente c) enthaltenen Wirkstoffen sind im Sinne der vorliegenden Erfindung neben den neutralen Verbindungen stets auch deren Salze mit anorganischen und/oder organischen Gegenionen zu verstehen. So können beispielsweise Sulfonylharnstoffe z.B. Salze bilden, bei denen der Wasserstoff der -SO₂-NH-Gruppe durch ein für die Landwirtschaft geeignetes Kation ersetzt ist. Diese Salze sind beispielsweise Metallsalze, insbesondere Alkalimetallsalze oder Erdalkalimetallsalze, insbesondere Natrium- und Kaliumsalze, oder auch Ammoniumsalze oder Salze mit organischen Aminen. Ebenso kann Salzbildung durch Anlagerung einer Säure an basischen Gruppen, wie z.B. Amino und Alkylamino, erfolgen. Geeignete Säuren hierfür sind starke anorganische und organische Säuren, beispielsweise HCl, HBr, H₂SO₄ oder HNO₃.

Die agrochemischen Wirkstoffe können auch Wachstumsregulatoren sein. Beispiele hierfür sind Cyclanilide, Ethephon, Tribufos und Thidiazuron.

Die agrochemischen Wirkstoffe können auch Safener sein. Beispiele hierfür sind
a) Verbindungen vom Typ der Dichlorphenylpyrazolin-3-carbonsäure, vorzugsweise Verbindungen wie 1-(2,4-Dichlorphenyl)-5-(ethoxycarbonyl)-5-methyl-2-pyrazolin-3-carbonsäureethylester (S1-1) ("Mefenpyr-diethyl", PM), und verwandte Verbindungen, wie sie in der WO 91/07874 beschrieben sind:
b) Derivate der Dichlorphenylpyrazolcarbonsäure, vorzugsweise Verbindungen wie 1-(2,4-Dichlorphenyl)-5-methyl-pyrazol-3-carbonsäureethylester (S1-2), 1-(2,4-Dichlorphenyl)-5-isopropyl-pyrazol-3-carbonsäureethylester (S1-3), 1-(2,4-Dichlorphenyl)-5-(1,1-dimethyl-ethyl)pyrazol-3-carbonsäureethyl-ester (S1-4), 1-(2,4-Dichlorphenyl)-5-phenyl-pyrazol-3-carbonsäureethylester (S1-5) und verwandte Verbindungen, wie sie in EP-A-333 131 und EP-A-269 806 beschrieben sind;
c) Verbindungen vom Typ der Triazolcarbonsäuren, vorzugsweise Verbindungen wie Fenchlorazol-ethyl(ester), d.h. 1-(2,4-Dichlorphenyl)-5-trichlormethyl-(1 H)-1,2,4-triazol-3-carbonsäureethylester (S1-6), und verwandte Verbindungen (EP-A-174 562 und EP-A-346 620);
d) Verbindungen vom Typ der 5-Benzyl- oder 5-Phenyl-2-isoxazolin-3- carbonsäure, oder der 5,5-Diphenyl-2-isoxazolin-3-carbonsäure vorzugsweise Verbindungen wie 5-(2,4-Dichlorbenzyl)-2-isoxazolin-3-carbonsäureethylester (S1-7) oder 5-Phenyl-2-isoxazolin-3-carbonsäureethylester (S1-8) und verwandte Verbindungen, wie sie in WO 91/08202 beschrieben sind, bzw. der 5,5-Diphenyl-2-isoxazolin-carbonsäureethylester (S1-9) ("Isoxadifen-ethyl") oder - n-propylester (S1-10) oder der 5-(4-Fluorphenyl)-5-phenyl-2-isoxazolin-3-carbonsäureethylester (S1-11), wie sie in der Patentanmeldung mit der Veröffentlichungsnummer WO-A-95/07897 beschrieben sind;
e) Verbindungen vom Typ der 8-Chinolinoxyessigsäure (S2), vorzugsweise (5-Chlor-8-chinolinoxy)-essigsäure-(1-methyl-hex-1-yl)-ester (Common name "Cloquintocet-mexyl" (S2-1) (siehe PM) (5-Chlor-8-chinolinoxy)-essigsäure-(1,3-dimethyl-but-1-yl)-ester (S2-2), (5-Chlor-8-chinolinoxy)-essigsäure-4-allyl-oxy-butylester (S2-3), (5-Chlor-8-chinolinoxy)-essigsäure-1-allyloxy-prop-2-ylester (S2-4), (5-Chlor-8-chinolinoxy)-essigsäureethylester (S2-5), (5-Chlor-8-chinolinoxy)-essigsäuremethylester (S2-6), (5-Chlor-8-chinolinoxy)-essigsäureallylester (S2-7), (5-Chfor-8-chinolinoxy)-essigsäure-2-(2-propyliden-iminoxy)-1-ethylester (S2-8), (5-Chlor-8-chinolinoxy)-essigsäure-2-oxo-prop-1-ylester (S2-9) und verwandte Verbindungen, wie sie in EP-A-86 750, EP-A-94 349 und EP-A-191 736 oder EP-A-0 492 366 beschrieben sind;
f) Verbindungen vom Typ der (5-Chlor-8-chinolinoxy)-malonsäure, vorzugsweise Verbindungen wie (5-Chlor-8-chinolinoxy)-malonsäurediethylester, (5-Chlor-8-chinolinoxy)-malonsäurediallylester, (5-Chlor-8-chinolinoxy)-malonsäure-methyl-ethylester und verwandte Verbindungen, wie sie in EP-A-0 582 198 beschrieben sind;
g) Wirkstoffe vom Typ der Phenoxyessig- bzw. -propionsäurederivate bzw. der aromatischen Carbonsäuren, wie z.B. 2,4-Dichlorphenoxyessigsäure(ester) (2,4-D), 4-Chlor-2-methyl-phenoxy-propionester (Mecoprop), MCPA oder 3,6-Dichlor-2-methoxy-benzoesäure(ester) (Dicamba);
h) Wirkstoffe vom Typ der Pyrimidine, die als bodenwirksame Safener in Reis angewendet werden, wie z. B. "Fenclorim" (PM) (= 4,6-Dichlor-2-phenylpy(imidin), das als Safener für Pretilachlor in gesätem Reis bekannt ist;
i) Wirkstoffe vom Typ der Dichloracetamide, die häufig als Vorauflaufsafener (bodenwirksame Safener) angewendet werden, wie z. B. "Dichlormid" (PM) (= N,N-Diallyl-2,2-dichloracetamid),
   "R-29148" (= 3-Dichloracetyl-2,2,5-trimethyl-1,3-oxazolidin von der Firma Stauffer),
   "Benoxacor" (PM) (= 4-Dichloracetyl-3,4-dihydro-3-methyl-2H-1,4-benzoxazin), "PPG-1292" (= N-Allyl-N-[(1 ,3-dioxolan-2-yl)-methyl]-dichloracetamid von der Firma PPG Industries),
   "DK-24" (= N-Allyl-N-[(allylaminocarbonyl)-methyl]-dichloracetamid von der Firma Sagro-Chem),
   "AD-67" oder "MON 4660" (= 3-Dichloracetyl-1-oxa-3-aza-spiro[4,5]decan von der Firma Nitrokemia bzw. Monsanto),
   "Diclonon" oder "BAS145138" oder "LAB145138" (= 3-Dichloracetyl-2,5,5-trimethyl-1,3-diazabicyclo[4.3.0]nonan von der Firma BASF) und
   "Furilazol" oder "MON 13900" (siehe PM) (= (RS)-3-Dichloracotyl-5-(2-furyl)-2,2-dimethyloxazolidin);
j) Wirkstoffe vom Typ der Dichloracetonderivate, wie z. B.
   "MG 191" (CAS-Reg. Nr. 96420-72-3) (= 2-Dichlormethyl-2-methyl-1,3-dioxolan von der Firma Nitrokemia), das als Safener für Mais bekannt ist;
k) Wirkstoffe vom Typ der Oxyimino-Verbindungen, die als Saatbeizmittel bekannt sind, wie z. B.
   "Oxabetrinil" (PM) (= (Z)-1,3-Dioxolan-2-ylmethoxyimino(phenyl)acetonitril), das als Saatbeiz-Safenerfür Hirse gegen Schäden von Metolachlor bekannt ist;
   "Fluxofenim" (PM) (= 1-(4-Chlorphenyl)-2,2,2-trifluor-1-ethanon-O-(1,3. dioxolan-2-ylmethyl)-oxim, das als Saatbeiz-Safener für Hirse gegen Schäden von Metolachlor bekannt ist, und
   "Cyometrinil" oder "CGA-43089" (PM) (= (Z)-Cyanomethoxyimino(phenyl)acetonitril), das als Saatbeiz-Safener für Hirse gegen Schäden von Metolachlor bekannt ist;
l) Wirkstoffe vom Typ der Thiazolcarbonsäureester, die als Saatbeizmittel bekannt sind, wie z. B.
   "Flurazol" (PM) (= 2-Chlor-4-trifluormethyl-1,3-thiazol-5-carbonsäurebenzylester), das als Saatbeiz-Safener für Hirse gegen Schäden von Alachlor und Metolachlor bekannt ist;
m) Wirkstoffe vom Typ der Naphthalindicarbonsäurederivate, die als
   Saatbeizmittel bekannt sind, wie z. B.
   "Naphthalic anhydrid" (PM) (= 1,8-Naphthalindicarbonsäureanhydrid), das als Saatbeiz-Safener für Mais gegen Schäden von Thiocarbamatherbiziden bekannt ist,
n) Wirkstoffe vom Typ Chromanessigsäurederivate, wie z. B.
   "CL 304415" (CAS-Reg. Nr. 31541-57-8) (= 2-(4-Carboxy-chroman-4-yl)-essigsäure von der Firma American Cyanamid), das als Safener für Mais gegen Schäden von Imidazolinonen bekannt ist;
o) Wirkstoffe, die neben einer herbiziden Wirkung gegen Schadpflanzen auch Safenerwirkung an Kulturpflanzen wie Reis aufweisen, wie z, B. "Dimepiperate" oder "MY-93" (PM) (= Piperidin-1-thiocarbonsäure-S-1-methyl-1-phenylethylester), das als Safener für Reis gegen Schäden des Herbizids Molinate bekannt ist;
   "Daimuron" oder "SK 23" (PM) (= 1-(1-Methyl-1-phenylethyl)-3-p-tolyl-harnstoff), das als Safener für Reis gegen Schäden des Herbizids Imazosulfuron bekannt ist,
   "Cumyluron" = "JC-940" (= 3-(2-Chlorphenylmethyl)-1-(1-methyl-1-phenylethyl)-harnstoff, siehe JP-A-50087254), das ais Safener für Reis gegen Schäden einiger Herbizide bekannt ist,
   "Methoxyphenon" oder "NK 049" (= 3,3'-Dimethyl-4-methoxy-benzophenon), das als Safener für Reis gegen Schäden einiger Herbizide bekannt ist,
   "CSB" (= 1-Brom-4-(chlormethylsulfonyl)-benzol) (CAS-Reg. Nr. 54091-06-4 von Kumiai), das als Safener gegen Schäden einiger Herbizide in Reis bekannt ist,
p) N-Acylsulfonamide der Formel (S3) und ihre Salze, 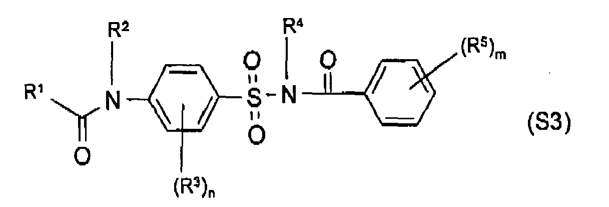 wie sie in WO-A-97/45016 beschrieben sind,
q) Verbindungen vom Typ der Acylsulfamoylbenzoesäureamide der nachfolgenden Formel (S4), die z.B. bekannt sind aus WO-A-99/16744, 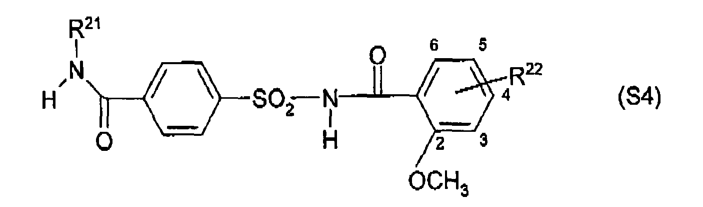 worin
   R21 = Cyclo-Propyl und R22 = H ist (4-Cyclopropylaminocarbonyl-N-(2-methoxybenzoyl)benzolsulfonamid; Cyprosulfamide);
   R21 = Cyclo-Propyl und R22 = 5-Cl ist,
   R21 = Ethyl und R22 = H ist,
   R21 = iso-Propyl und R22 = 5-Cl ist und
   R21 = iso-Propyl und R22 = H ist (4-iso-propylaminocarbonyl-N-(2-methoxybenzoyl)benzolsulfonamid);
r) Verbindungen der Formel (S5), 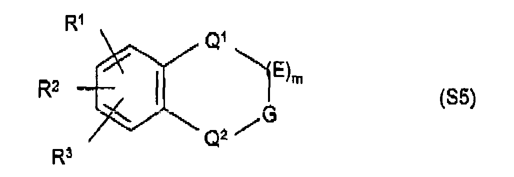 wie sie in der WO-A 98/13 361 beschrieben sind,
   einschließlich der Stereoisomeren und den in der Landwirtschaft gebräuchlichen Salzen.

Bevorzugt sind Safener wie Mefenpyr-diethyl, Cloquintocet-mexyl, Isoxadifen-ethyl, 4-Cyclopropylaminocarbonyl-N-(2-methoxybenzoyl)benzolsulfonamid (Cyprosulfamide), 4-iso-propylaminocarbonyl-N-(2-methoxybenzoyl)benzolsulfonamid oder Fenchlorazol-ethyl; besonders bevorzugt sind Mefenpyr-diethyl, Cyprosulfamide und Isoxadifen-ethyl.

Eine besondere Ausführungsform der erfindungsgemäßen Formulierungen ist die Herstellung von Mischungen von Herbiziden und Safener. Die Gewichtsverhältnisse von Herbizid(mischung) zu Safener hängt im Allgemeinen von der Aufwandmenge an Herbizid und der Wirksamkeit des jeweiligen Safeners ab und kann innerhalb weiter Grenzen variieren, beispielsweise im Bereich von 200:1 bis 1:200, vorzugsweise 100:1 bis 1:100, insbesondere 20:1 bis 1:20.

Bevorzugte agrochemische Wirkstoffe neben Flufenacet und Mefenacet sind Diflufenican, Foramsulfuron, Ethoxysulfuron, Isoxadifen-ethyl, Cyprosulfamide, Mefenpyr-diethyl, Glyphosate, Glufosinate, lodosulfuron-methyl, Metosulam und deren Salze, z.B. die Ammonium- und Natriumsalze, besonders bevorzugt neben Flufenacet sind Glyphosate und Metosulam.

Die durch das erfindungsgemäße Verfahren hergestellten Formulierungen enthalten in der Regel 0,01 bis 60 Gew.-%, insbesondere 5 bis 40 Gew.-%, der agrochemischen Wirkstoffe (Komponente c) sowie an Herbiziden aus der Gruppe der Oxyacetamide.

In den durch das erfindungsgemäße Verfahren herstellbaren Formulierungen sind enthalten Tenside aus den Gruppen der Netz- und Dispergiermittel (Komponente d).

Als geeignete Netzmittel können feste Tenside, anionische und/oder zwitterionische Tenside, Sulfonate (Sulfosuccinate), Sulfate, Phosphonate, Phosphate und Carboxylate, aber auch alkalische Tenside (z.B. ®Synperonic T-Typen) verwendet werden. Sie können ausgewählt werden aus der Gruppe fester, d.h. bei Raumtemperatur nicht flüssiger Netzmittel, mit z.B. wachsartiger, amorpher oder kristalliner Beschaffenheit, bevorzugt aus der Gruppe der Reaktionsprodukte von Alkylenoxiden mit Alkylenpolyaminen, der Naphthalinsulfonsäuren und der Gruppe der Sulfobemsteinsäure-Derivate sowie den Salzen dieser Gruppen, die einerseits Mono- und Di-Ester der Sulfobernsteinsäure sowie deren Salze (Sulfosuccinate) enthalten können und andererseits alkylierte Naphthalinsulfonsäuren und deren Salze enthalten können.

Typische Vertreter geeigneter Netzmittel sind unter anderem ®Baykanol SL, ®Synperonic T-Typen (Blockpolymerisaten von Propylenoxid und Ethylenoxid auf Ethylendiamin), ®Aerosol OTB (Dioctylsulfosuccinat), ®Morwet EFW (alkylierte Naphthalinsulfonate), ®Nekal BX oder ®Morwet DB (alkylierte Naphthalinsulfonate), ®Galoryl MT 804 (alkylierte Naphthalinsulfonate).

Bevorzugt ist ®Baykanol SL.

Der Anteil der Netzmittel, in den nach dem erfindungsgemäßen Verfahren herstellbaren Formulierungen kann 1 - 30 Gew.-%, bevorzugt 5 - 15 Gew.-% betragen.

Geeignete Dispergatoren können ausgewählt werden aus der Gruppe ethoxylierte Triarylphenole, deren gegebenenfalls partielle Ester mit Phosphorsäure, Ligninsulfonsäuren, Kondensationsprodukte aromatischer, gegebenenfalls mehrkerniger, Sulfonsäuren (Naphthalinsulfonsäure) mit Formaldehyd, Polymerisate von gegebenenfalls alkylierten Acrylsäuren (Beispiel alkalischer Dispergatoren), Kondensationsprodukte von gegebenenfalls mehrkernigen Phenolen mit Formaldehyd und Na-Sulfit, Sulfonsäuren mehrkerniger Aromaten, sowie die Alkali-, Erdkali- und Ammoniumsalze diese Stoffe.

Typische Vertreter geeigneter Dispergatoren sind unter anderem ®Soprophor BSU (phosphatiertes Triarylphenolethoxylat), ®Borresperse NA (Ligninsulfonat), ®Rapidaminreserve D (Kondensationsprodukt Phenol mit Na-Sulfit und Formaldehyd), ®Galoryl DT-Marken (Kondensationsprodukt aromatischer Sulfonsäuren mit Formaldehyd), ®Morwet D425 (Kondensationsprodukt aus Naphthalinsulfonsäure und Formaldehyd).

Bevorzugt sind Kondensationsprodukte von aromatischen Sulfonsäuren mit Formaldehyd und deren Salze, besonders bevorzugt sind die Natriumsalze von Naphthalinsulfonsäuren mit Formaldehyd, ®wie Galoryl DT530 und ®Morwet D425 (beides Kondensationsprodukte aus Naphthalinsulfonsäure und Formaldehyd).

Der Anteil der Dispergatoren, in den nach dem erfindungsgemäßen Verfahren herstellbaren Formulierungen kann 1 - 30 Gew.-%, bevorzugt 5 - 15 Gew.-% betragen.

Als weitere Hilfs - und Zusatzstoffe (Komponente e), die in den durch das erfindungsgemäße Verfahren herstellbaren Formulierungen enthalten sein können, kommen alle üblichen Formulierhilfsmittel in Frage, wie Lösungsmittel, Trägerstoffe von niedriger Saugfähigkeit, Antischaummittel (Entschäumer) und Emulgatoren. Weitere Hilfs - und Zusatzstoffe können aber auch Konservierungsmittel, Farbstoffe und Füllstoffe, sowie Säuren und Basen zur Einstellung eines pH-Wertes von 2 - 4, sein.

Geeignete Lösungsmittel für die durch das erfindungsgemäße Verfahren herstellbaren Formulierungen können ausgewählt werden aus der Gruppe der aromatischen und aliphatischen Kohlenwasserstoffe, Ester und Amide organischer und anorganischer Säuren, aromatische, aliphatische und cycloaliphatische Ketone und Alkohole.

Typische Vertreter geeigneter Lösungsmittel sind unter anderem ®Solvesso-Typen (aromatischer Kohlenwasserstoff), ®Essobayol (aliphatischer Kohlenwasserstoff), ®Exxate (Ester organischer Säuren), ®Hallcomide (Amide organischer Säuren, Acetonphenon (aromatisches Keton), Methylisobutylketon (aliphatisches Keton), ®Anon (Cyclohexanon: Cycloaliphatisches Keton).

Bevorzugt sind Lösungsmittel aus der Gruppe der aromatischen und aliphatischen Kohlenwasserstoffe, wie z.B. ®Solvesso-Typen (aromatische Kohlenwasserstoffe), besonders bevorzugt aromatische Kohlenwasserstoffe, wie ®Solvesso 200 ND (alkyliertes Naphthalin).

Der Anteil der Lösungsmittel in den durch das erfindungsgemäße Verfahren herstellbaren Formulierungen kann 0,01 - 50 Gew.-%, bevorzugt 2-20 Gew.% betragen.

Die Trägerstoffe mit niedriger Saugfähigkeit in den durch das erfindungsgemäße Verfahren herstellbaren Formulierungen können einer Gruppe entnommen werden, welche Mineralien, Carbonate, Sulfate und Phosphate von Erdalkali- und Erdmetallen, wie Calciumcarbonat, polymere Kohlenhydrate, Gerüstsilikate, wie Fällungskieselsäuren mit niedriger Saugfähigkeit, und natürliche Gerüstsilikate, wie Kaolin, umfasst. Daneben sind sie gekennzeichnet durch eine Aufnahmefähigkeit von weniger als 160 g DBP pro 100 g Trägermaterial.

Typische Vertreter geeigneter Trägerstoffe sind unter anderem ®Agsorb LVM-GA (Attapulgit), ®Harborlite 300 (Perlit), ®Collys HV (modifizierte Stärke), ®Omya-Kreide (Calciumcarbonat), ®Extrusil (Fällungskieselsäure), ®Kaolin Tec 1 bzw. ®Kaolin 1777 (Kaolin, Aluminiumhydrosilicat), ®Steamic 00S (Talk, Magnesiumsilicat).

Bevorzugt sind hier natürliche Gerüstsilikate und Calciumcarbonat-Typen wie ®Omya-Kreide (Calciumcarbonat), ®Kaolin 1777 (Kaolin, Aluminiumhydrosilicat) und ®Harborlite 300 (Perlit), besonders bevorzugt natürliche Gerüstsilikate wie ®Kaolin 1777 und ®Harborlite 300.

Der Anteil der Trägerstoffe mit niedriger Saugfähigkeit, in den nach dem erfindungsgemäßen Verfahren herstellbaren Formulierungen kann 0,01 - 80 Gew.%, bevorzugt 1 - 50 Gew.-%, besonders bevorzugt 10 - 30 Gew.-% betragen.

Geeignete Antischaummittel können ausgewählt werden aus der Gruppe der Ester der Phosphorsäure mit niederen Alkoholen, C6-C10-Alkohole, Silicontenside (Suspoemulsionen von hydrophobisierten Kieselsäurepartikeln in wässrigen Emulsionskonzentraten auf der Basis flüssiger Silicontenside), wie Polydimethylsiloxan, sowie deren Absorbate an festes Trägermaterial.

Typische Vertreter geeigneter Antischaummittel sind unter anderem ®Rhodorsil 432 (Silicontensid), Butylphosphat, iso-Butylphosphat, n-Octanol, ®Wacker ASP15 (Polydimethylsiloxan, an festem Träger absorbiert), ®Antischaum-Mittel SE 2 (Polydimethylsiloxan) und ®Antischaummittel SL.

Bevorzugt sind Suspoemulsionen von hydrophobisierten Kieselsäurepartikeln in wässrigen Emulsionskonzentraten auf der Basis flüssiger Silicontenside, wie ®Antischaum-Mittel SL (Polydimethylsiloxan).

Der Anteil der Antischaummittel, in den nach dem erfindungsgemäßen Verfahren herstellbaren Formulierungen kann 0,1 - 10 Gew.-%, bevorzugt 0,1 - 5 Gew.-%, besonders bevorzugt 0,1 - 1 Gew.-% betragen.

Unter dem Begriff "Aufschlämmung" (slurry) wird erfindungsgemäß eine Dispersion von festen Partikel in einer flüssigen Phase verstanden.

Unter dem Begriff "Granulat" wird erfindungsgemäß ein staufreies, rieselfähiges wasserdispergierbares adjuvanthaltiges Wirkstoffgranulat verstanden, welches durch das Wirbelschichtverfahren hergestellt wird und wobei 99 % der Granulate eine Größe zwischen 45 µm bis 2 mm aufweisen.

Wirbelschichtverfahren sind in allgemeiner Form, beispielsweise in Winnacker-Küchler, Chemische Technologie, 4. Auflage, S. 385 ff (Wirbelschichtgranulierung), C. Hanser Verlag, München 1984, beschrieben.

Wirbelschichtverfahren (z.B. kontinuierlich oder diskontinuierlich) ermöglichen Granulate in einem Arbeitsgang herzustellen. Die einzelnen Komponenten werden dabei in den gewünschten Mengenverhältnissen (also Wirksubstanzen, ggf. Bindemittel, Tenside und Hilfsmittel) chargenweise vorgelegt oder als Mischung kontinuierlich zugefahren (und dann entsprechend ausgetragen) und dabei mit heißer Luft (oder einem inerten Gas wie Stickstoff) aufgewirbelt und aufgeheizt. Dabei kann die Luftzufuhrtemperatur 40 bis 250°C betragen, vorzugsweise 60 bis 150°C. Hierbei wird die Verweildauer dadurch bestimmt bis die gewünschte Granulatpartikelgrößenverteilung erreicht ist.

Die erfindungsgemäßen WGs können in Wasser wässrige Spritzbrühen bilden, die bei der Anwendung auch biologisch vorteilhafte Resultate aufweisen. Dabei wird eine wirksame Menge der Formulierung auf die Schadorganismen oder die Orte, an denen sie auftreten, appliziert, z.B. auf die Pflanze, Pflanzenteile, Pflanzensamen oder die Fläche auf der die Pflanzen wachsen, z.B. die Anbaufläche.

Die erfindungsgemäßen WGs gehen in Wasser sehr gut auf.

Weiterhin Gegenstand der Erfindung ist ein Verfahren zur Bekämpfung von Schadpflanzen mittels der erfindungsgemäßen WGs und/oder herbiziden Mittel, bevorzugt als wässrige Spritzbrühe und bevorzugt in einer wirksamen Menge, die auf die Schadpflanzen oder deren Lebensraum aufgebracht wird.

Die erfindungsgemäß behandelten Pflanzen sind, alle Arten von Schadpflanzen, wie Unkräuter, in Land- und Forstwirtschaft sowie im Gartenbau, beispielsweise auch in transgenen Kulturen von Nutz- und Zierpflanzen.

Weiterhin Gegenstand der Erfindung ist die Verwendung der erfindungsgemäßen WGs und/oder herbiziden Mittel zur Bekämpfung von Schadpflanzen.

Die Erfindung wird durch die Beispiele näher erläutert ohne sie darauf zu beschränken.

### Beispiele

Verwendete Substanzen und ihre chemische Klassen
- Glyphosate: Herbizid
- Flufenacet: Herbizid
- Metosulam: Herbizid
- Genapol C-100: Adjuvant, Polyglykol-ether
- Antischaummittel SL: Entschäumer auf Silikonbasis
- Galoryl DT530: Natrium-Napthalin-Sulfonat
- Baykanol SL: Netzmittel
- Sipernat 50S: Hochabsorptive Fällungskieselsäure (Degussa)
- Kaolin 1777: Natürliches Silikat

### Herstellungsbeispiel

Schritt 1 (Bildung Absorbat): In einem auf 50°C aufgeheizten Mischer oder direkt im Wirbelbett werden 120 g Sipernat 50 S vorgelegt. Hierzu werden 250 g, bei 50°C geschmolzenes Genapol C-100 langsam hinzugegeben. Anschließend wird 30 Minuten unter Kühlung nachgemischt.

Schritt 2 (Bildung Suspension): 310 g Wasser werden in einem Kessel vorgelegt und 2 g Antischaummittel SL, 70 g Baykanol SL, 100 g Galoryl DT530, 180 g Glyphosate (getrocknet), 61,6 g Flufenacet, 3,1 g Metosulam und 203,1 g Kaolin 1777 zugemischt. Diese Suspension wird durch eine Zahnkolloidmühle nass vorvermahlen. Anschließend wird die Suspension in einer Dyno-Mühle feinvermahlen bis die gewünschte Partikelgröße (bis 50 % der Partikel weisen eine Größe von < 5 µm auf) erreicht ist.

Schritt 3 (Bildung Aufschlämmung): 190 g Wasser und das Absorbat aus Schritt 1 wird der Suspension aus Schritt 2 unter Rühren zugesetzt und anschließend per Zahnkolloidmühle dispergiert (alternatives Verfahren mit "High Shear Mixer", z.B. von der Firma Fryma).

Schritt 4 (Bildung Granulat): Die Aufschlämmung aus Schritt 3 wird in einen Wirbelschichtgranulierer (Aeromatic MP-1) unter folgenden Parametern eingesprüht: Einlasstemperatur 70°C, Produkttemperatur 40°C, Nachtrockenzeit bis eine Restfeuchte von < 1 Gew.-% erreicht.

Die Zusammensetzung des erhaltenen WGs ist in Tabelle 1 dargestellt.

**Tabelle 1: Zusammensetzung und Bestimmung von Eigenschaften**

| Zusammensetzung | | | Lagerstabilität bei ...... nach ...... | | | |
|---|---|---|---|---|---|---|
| Komponente | Handelsname | Gew.-% | 40°C | 40°C | 35°C | 40°C |
| | | | 1 Monat | 2 Monaten | 3 Monaten | |
| a) | Genapol C-100 | 25,00 | - | - | - | - |
| b) | Sipernat 50S | 12,00 | - | - | - | - |
| c) | Glyphosate | 18,2 | 18,7 | 18,6 | 18,9 | 18,5 |
| c) | Flufenacet | 6,14 | 6,01 | 5,93 | 5,84 | 5,76 |
| c) | Metosulam | 0,307 | 0,302 | 0,294 | 0,297 | 0,285 |
| d) | Galoryl DT530 | 10,00 | - | - | - | - |
| d) | Baykanol SL | 7,00 | - | - | - | - |
| e) | Kaolin 1777 | 20,31 | - | - | - | - |
| e) | Antischaummittel | 0,20 | - | - | - | - |
| | Wasser | 1,00 | - | - | - | - |
| | Total | 100,00 | | | | |
| | | | | | | |
| Suspensionsstabilität nach CIPAC MT 168 (1 %ig) | | | 90% | 89 % | 82 % | 85 % |
| Nasssiebrückstand 150 µm nach CIPAC MT 167 | | | - | 0% | 0 % | 0% |
| Nasssiebrückstand 45 µm nach CIPAC MT 167 | | | - | 0,19% | 0,15 % | 0,23 % |

In Tabelle 1 wird zusätzlich die Lagerstabilität der Wirkstoffe (Komponente c) in den erfindungsgemäßen WGs gezeigt: Nach 3 Monaten liegt für diese noch eine ausgezeichnete physikalische und chemische Lagerstabilität vor. Daneben zeigen die erfindungsgemäßen WGs eine hervorragende Suspensionsstabilität und keinerlei Gefahr für Düsenverstopfungen bei Applikation der Spritzbrühe (siehe Daten zu Nasssiebrückständen 150 µm bzw. 45 µm).

**Tabelle 2: Biologischer Vergleichsversuch (Feldversuchsergebnisse: Spray-Applikation mit 1000 Uha Wasser, anschließend Bonitur an den angegebenen Zeitpunkten)**

| Erfindungsgemäßes WG *) | Wirksamkeit in % Abtötung des vorliegenden Unkräuter- bzw. Ungräser-Spektrums | | | | |
|---|---|---|---|---|---|
| | 1) | 2) | 3) | 4) | 5) |
| mit Adjuvant **) | 90 | 88 | 56 | 95 | 77 |
| ohne Adjuvant | 88 | 83 | 51 | 92 | 70 |

| | | | | | |
|---|---|---|---|---|---|
| Anmerkungen: *) enthaltend als Komponente (c) Flufenacet (0,6 kg Wirkstoff/ha), Glyphosate (1,8 kg Wirkstoff/ha), Metosulam (0,03 kg Wirkstoff/ha); **) enthaltend als Komponente (a) Genapol C-100; 1) Wirkung auf Unkräuter ("Dikotyle") im Vorauflauf 9 Wochen nach Applikation; 2) Wirkung auf Unkräuter ("Dikotyle") im Nachauflauf 4 Wochen nach Applikation; 3) Wirkung auf Ungräser ("Monokotyle") im Nachauflauf 7 Tage nach Applikation; 4) Wirkung auf Ungräser ("Monokotyle") im Nachauflauf 4 Wochen nach Applikation; 5) Wirkung auf Ungräser ("Monokotyle") im Nachauflauf 9 Wochen nach Applikation. | | | | | |

Die Ergebnisse in Tabelle 2 zeigen eine bessere biologische Wirkung der erfindungsgemäßen WGs mit Adjuvant im Vergleich zu den identischen WGs ohne Adjuvant.

## Patentansprüche

1. Verfahren zur Herstellung von wasserdispergierbaren Granulaten WG, enthaltend folgende Schritte (1 bis 4) und Komponenten (a bis e):
(1) Bildung eines Absorbates durch Mischung von
- einem oder mehreren flüssigen oder verflüssigbaren Adjuvantien (a)
- einem oder mehreren Trägerstoffen von hoher Saugfähigkeit (b), **gekennzeichnet durch** eine Aufnahmefähigkeit von wenigstens 160 g Dibutylphthalat (DBP) pro 100 g Trägermaterial;
(2) Bildung einer Suspension **durch** Mischung von
- einem Herbizid aus der Gruppe der Oxyacetamide mit einem oder mehreren agrochemischen Wirkstoffen (c),
- einem oder mehreren Tensiden aus den Gruppen der Netz- und Dispergiermittel (d),
- einem oder mehreren in der Formulierung üblichen Hilfs- und Zusatzstoffen (e), und
- anschließender Nassvermahlung bis 50 % der Partikelgröße < 5 µm sind;
(3) Bildung einer Aufschlämmung ("slurry") **durch** Einmischen des Absorbates (1) in die Suspension (2);
(4) Bildung eines wasserdispergierbaren Granulates (WG) **durch** Trocknung der Aufschlämmung (3) im Wirbelschichtverfahren bei einer Produkttemperatur bis maximal 50°C.

2. Verfahren gemäß Anspruch 1, enthaltend als Adjuvantien (Komponente a) Alkylenglykole des Ether-Typs.

3. Verfahren gemäß Anspruch 1 oder 2, enthaltend als agrochemische Wirkstoffe (Komponente c) Diflufenican, Foramsulfuron, Ethoxysulfuron, Isoxadifen-ethyl, Cyprosulfamide, Mefenpyr-diethyl, Glyphosate, Glufosinate, lodosulfuron-methyl, Metosulam und deren Salze.

4. Wasserdispergierbares Granulat (WG) enthaltend die Komponenten
a) 0,01 bis 60 Gew.-% eines nicht-ionischen Adjuvants, vorzugsweise Genapol C-100 und Atlox MBA 13/10;
b) 0,005 bis 50 Gew.-% eines Trägerstoffs von hoher Saugfähigkeit (DBP-Aufnahme ≥ 160 g/100 g Träger), vorzugsweise Sipernat 50S;
c) 0,01 bis 60 Gew.-% eines Herbizids aus der Gruppe der Oxyacetamide, vorzugsweise Flufenacet, mit einem oder mehreren agrochemischen Wirkstoffen, vorzugsweise Glyphosate und Metosulam;
d) 1,0 bis 30 Gew.-% eines oder mehrerer Tenside aus der Gruppe der Netz- und Dispergiermittel, vorzugsweise Galoryl DT530 und Baykanol SL;
e) 0,01 bis 80 Gew.-% eines oder mehrerer in der Formulierung üblicher Hilfs- und Zusatzstoffe, vorzugsweise Kaolin 1777 und Antischaummittel SL.

5. Wasserdispergierbares Granulat (WG) gemäß Anspruch 4, enthaltend als Adjuvant (Komponente a) Alkylenglykole des Ether Typs.

6. Wasserdispergierbares Granulat (WG gemäß Anspruch 4 oder 5, enthaltend als agrochemische Wirkstoffe (Komponente c) Diflufenican, Foramsulfuron, Ethoxysulfuron, Isoxadifen-ethyl, Cyprosulfamide, Mefenpyr-diethyl, Glyphosate, Glufosinate, Iodosulfuron-methyl, Metosulam und deren Salze.

7. Wasserdispergierbares Granulat (WG) gemäß einem oder mehreren der Ansprüche 4 bis 6, erhältlich durch ein Verfahren zur Herstellung gemäß einem oder mehreren der Ansprüche 1 bis 3.

8. Verfahren zur Bekämpfung von Schadpflanzen, wobei ein wasserdispergierbares Granulat (WG) gemäß einem oder mehreren der Ansprüche 4 bis 6 in Form einer wässrigen Spritzbrühe auf die Schadpflanzen oder deren Lebensraum aufgebracht wird.

9. Verwendung eines wasserdispergierbaren Granulats (WG) gemäß einem oder mehreren der Ansprüche 4 bis 6 zur Bekämpfung von Schadpflanzen.

10. Herbizides Mittel enthaltend eine Mischung von Flufenacet, Glyphosate und Metosulam (Komponente c).

11. Herbizides Mittel gemäß Anspruch 10, enthaltend zusätzlich ein nicht-ionisches Adjuvant (Komponente a).

12. Verfahren zur Bekämpfung von Schadpflanzen, wobei ein herbizides Mittel gemäß einem der Ansprüche 10 oder 11 in Form einer wässrigen Spritzbrühe auf die Schadpflanzen oder deren Lebensraum aufgebracht wird.

13. Verwendung eines herbiziden Mittels gemäß einem der Ansprüche 10 oder 11 zur Bekämpfung von Schadpflanzen.
